(19) Europäisches Patentamt
European Patent Office
Office européen des brevets

(11) EP 1 191 044 A2

(12) **EUROPÄISCHE PATENTANMELDUNG**

(43) Veröffentlichungstag:
**27.03.2002 Patentblatt 2002/13**

(51) Int Cl.[7]: **C08F 212/08**, C08F 236/10, C08F 2/38, D21H 17/35

(21) Anmeldenummer: **01122451.6**

(22) Anmeldetag: **20.09.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **21.09.2000 DE 10046930**

(71) Anmelder: **BASF AKTIENGESELLSCHAFT
67056 Ludwigshafen (DE)**

(72) Erfinder:
- **Schädler, Volker
68163 Mannheim (DE)**
- **Manders, Lambertus
67069 Ludwigshafen (DE)**
- **Ettl, Roland
67454 Hassloch (DE)**
- **Wirth, Thomas
67521 Freinsheim (DE)**

(74) Vertreter: **Riedl, Peter, Dr. et al
Patentanwälte
Reitstötter, Kinzebach & Partner (GbR),
Ludwigsplatz 4
67059 Ludwigshafen (DE)**

(54) **Verfahren zur Herstellung wässriger Styrol-Butadien-Polymerdispersionen**

(57) Verfahren zur Herstellung einer wässrigen Styrol-Butadien-Polymerdispersion durch radikalische wässrige Emulsionspolymerisation einer Monomermischung M, enthaltend

- Styrol,
- Butadien und gegebenenfalls
- bis 30 Gew.-%, bezogen auf 100 Gew.-% Monomere, von Styrol und Butadien verschiedene ethylenisch ungesättigte Comonomere;

nach einem Monomerzulaufverfahren, dadurch gekennzeichnet, dass man der Polymerisationsreaktion in ihrem Verlauf ein Reglersystem zuführt, das bezogen auf 100 Gew.-% Monomere,

- 0,02 bis 0,4 Gew.-% Terpinolen und
- 0,5 bis 2 Gew.-% einer organischen Verbindung S mit wenigstens einer SH-Gruppe

umfasst.

EP 1 191 044 A2

## Beschreibung

Die vorliegende Erfindung betrifft ein Verfahren zur Herstellung einer wässrigen Styrol-Butadien-Polymerdispersion durch radikalische, wässrige Emulsionspolymerisation einer Styrol- und Butadien-enthaltenden Monomermischung nach einem Monomerzulaufverfahren. Die Erfindung betrifft auch die nach diesem Verfahren erhältlichen Styrol-Butadien-Polymerdispersionen sowie deren Verwendung als Bindemittel in Papierstreichfarben.

Papiere und Karton werden zur Verbesserung ihrer Bedruckbarkeit und ihrer optischen Eigenschaften wie Glanz, Weiße und Opazität häufig bei ihrer Herstellung mit einer pigmenthaltigen Beschichtung versehen. Die hierbei verwendeten Beschichtungsmassen, die auch als Papierstreichfarben bezeichnet werden, enthalten neben dem Pigment auch ein Bindemittel, welches dazu dient, die einzelnen Pigmentteilchen untereinander und auf der Papieroberfläche zu verankern und somit eine geschlossene Pigmentschicht zu bilden.

Beschichtet, d.h. gestrichen werden insbesondere graphische Papiere und Kartons, die bedruckt werden sollen. Gestrichen werden außerdem Spezialpapiere wie Etiketten, Tapeten und nicht bedruckte Silikonpapiere, die als Träger für Selbstklebeetiketten verwendet werden.

Obwohl das Bindemittel in den Papierstreichmassen in der Regel nur in einer Menge von bis zu 30 Gew. -Teilen auf 100 Gew.-Teile Pigment enthalten ist, beeinflußt es doch maßgeblich die Eigenschaften des Papiers, insbesondere die Druckperformance und das Erscheinungsbild. Für die Druckperformance sind beispielsweise die Glätte, die Blisterfreiheit, die Kompressibilität sowie das Absorptionsverhalten gegenüber Flüssigkeiten, beispielsweise Druckfarben oder Wischwasser, wichtig. Ein wichtiges Kriterium ist auch die Stabilität der Beschichtung gegenüber mechanischen Beanspruchungen. Insbesondere beim Offset-Druck muß eine hohe mechanische Stabilität gewährleistet sein, da die Oberfläche aufgrund der Zügigkeit (Tack) der verwendeten Druckfarben mechanisch sehr stark beansprucht wird. Aufgrund des beim Offset-Druck verwendeten Wischwassers muß diese mechanische Festigkeit auch im feuchten Zustand gewährleistet sein. Die mechanische Belastbarkeit einer Papierbeschichtung wird auch als Rupffestigkeit, die mechanische Belastbarkeit im feuchten Zustand auch als Naßrupffestigkeit bezeichnet.

Die Rupffestigkkeit der Papierbeschichtungen gewinnt zunehmend an Bedeutung, da die in den letzten Jahren stark angestiegenen Druckgeschwindigkeiten eine zunehmende mechanische Belastung der Papieroberfläche zur Folge haben. Aufgrund dessen werden die als Bindemittel im Stand der Technik verwendeten wässrigen Polymerisatdispersionen in zunehmend höheren Gewichtsanteilen in der Beschichtung eingesetzt. Dies hat jedoch eine unerwünschte Kostensteigerung der Einsatzmaterialien für die Papierbeschichtung zur Konsequenz. Außerdem verändert der erhöhte Bindemittelanteil die optischen Eigenschaften und die Bedruckbarkeit des Papiers in nachteiliger Weise. So führt der erhöhte Bindemittelanteil zu einem verlangsamten Wegschlagverhalten der Druckfarbe, was unter anderem zum Abliegen der Druckfarbe im Stapel führen kann.

Die EP-A 407 059 beschreibt ein Verfahren zur Herstellung Butadien-haltiger Copolymer-Latices mit einem Gelanteil von wenigstens 5%, die in Gegenwart von Kettenübertragungsmitteln hergestellt wurden. Als Kettenübertragungsmittel werden unter anderem Mischungen aus Terpen-Kohlenwasserstoffen und schwefelhaltigen Kettenübertragungsmitteln genannt. Die dort beschriebenen Latices können als Bindemittel in Papierbeschichtungsmitteln eingesetzt werden.

Aus der DE 195 12 999 sind Papierbeschichtungsmittel bekannt, die als Bindemittel einen Styrol-Butadien-Copolymerlatex enthalten, dessen Polymerisat zwei Glasumwandlungspunkte aufweist, welche wenigstens 5 K voneinander verschieden sind. Die Herstellung erfolgt in der Regel durch Emulsionspolymerisation der zu polymerisierenden Monomere in Gegenwart von Kettenübertragungsmitteln. Als Kettenübertragungsmittel werden unter anderem Alkylmercaptane und Kohlenwasserstoffe wie Terpinolen oder $\alpha$-Methylstyroldimer sowie deren Kombinationen verwendet.

Die im Stand der Technik beschriebenen Bindemittel vermögen häufig die Anforderungen an die Rupffestigkeit, insbesondere an die Naßrupffestigkeit nicht im gewünschten Umfang zu erfüllen. Die im Stand der Technik vorgeschlagene Verwendung von Terpinolen als Polymerisationsregler führt unter den dort angegebenen Bedingungen zu Problemen bei der Polymerisation. Insbesondere ist der Restmonomergehalt der erhaltenen Dispersion unvertretbar hoch.

Der vorliegenden Erfindung liegt somit die Aufgabe zugrunde, einen Polymerlatex bereitzustellen, der bereits bei geringen Einsatzmengen in Papierstreichmassen zu Papierbeschichtungen mit hoher Trocken- und Naßrupffestigkeit führt.

Es wurde überraschenderweise gefunden, dass diese Aufgabe durch einen Styrol-Butadien-Polymerlatex gelöst werden kann, der durch radikalische wässrige Emulsionspolymerisation einer Styrol- und Butadien-haltigen Monomermischung nach einem Monomerzulaufverfahren hergestellt wurde, wobei das Verfahren dadurch gekennzeichnet ist, dass man der Polymerisationsreaktion in ihrem Verlauf ein Reglersystem zuführt, das bezogen auf 100 Gew.-% Monomere,

- 0,02 bis 0,4 Gew.-% Terpinolen und

- 0,5 bis 2 Gew.-% einer organischen Verbindung S mit wenigstens einer SH-Gruppe

umfasst.

Demnach betrifft die vorliegende Erfindung ein Verfahren zur Herstellung einer wässrigen Styrol-Butadien-Polymerdispersion durch radikalische wässrige Emulsionspolymerisation einer Monomermischung M, enthaltend

- Styrol,
- Butadien und gegebenenfalls
- bis 30 Gew.-%, bezogen auf 100 Gew.-% Monomere M, von Styrol und Butadien verschiedene ethylenisch ungesättigte Comonomere;

nach einem Monomerzulaufverfahren, das dadurch gekennzeichnet ist, dass man im Verlauf der Polymerisationsreaktion das vorstehend beschriebene Reglersystem zuführt.

Die nach dem Verfahren erhältlichen Polymerdispersionen zeichnen sich durch einen geringen Koagulat-Anteil, eine hohe mechanische Stabilität und einen geringen Restmonomergehalt aus. Außerdem lassen sich mit diesen Dispersionen Papierstreichmassen herstellen, die auch bei geringen Bindemittelanteilen den Papierstreichmassen des Standes der Technik hinsichtlich der Rupffestigkeit, insbesondere der Naßrupffestigkeit überlegen sind. Die nach dem erfindungsgemäßen Verfahren erhältlichen Polymerdispersionen sind daher ebenfalls Gegenstand der vorliegenden Erfindung.

Das erfindungsgemäße Reglersystem umfasst vorzugsweise 0,05 bis 0,35 Gew.-% und insbesondere 0,1 bis 0,3 Gew.-% Terpinolen (4-(2-Propyliden)-1-methylcyclohex-1-en) und vorzugsweise 0,6 bis 1,8 und insbesondere 0,7 bis 1,5 Gew.-% einer organischen Verbindung S mit wenigstens einer SH-Gruppe. Bevorzugte Verbindungen S sind in den hydrophoben Monomeren Styrol und Butadien löslich. Insbesondere sind sie ausgewählt unter $C_4$-$C_{18}$-Alkylmercaptanen wie n-Hexylmercaptan, n-Octylmercaptan, tert.-Octylmercaptan, n-Decylmercaptan, n-Dodecylmercaptan, tert.-Dodecylmercaptan, n-Hexadecylmercaptan und Stearylmercaptan.

Erfindungsgemäß ist die Gesamtmenge an Terpinolen in dem Reglersystem kleiner als die Gesamtmenge an Verbindung S. In der Regel beträgt das Gewichtsverhältnis von Terpinolen zu Verbindungen S wenigstens 1:100, vorzugsweise wenigstens 1:50 und insbesondere wenigstens 1:10. Es beträgt höchstens 1:1,25, insbesondere höchstens 1:1,5 und besonders bevorzugt höchstens 1:2.

Der Begriff "Monomerzulaufverfahren" ist im Stand der Technik gebräuchlich und bezeichnet im Unterschied zum "Batch-Verfahren" ein Polymerisationsverfahren, bei dem man die zu polymerisierenden Monomere nicht vollständig im Reaktonsgefäss vorlegt sondern bei dem man die Hauptmenge der Monomere über einen definierten Zeitraum, vorzugsweise nach Massgabe ihres Verbrauchs der Polymerisationsreaktion, d.h. dem unter Polymerisationsbedingungen befindlichen Polymerisationsgefäss, zuführt. Vorzugsweise werden wenigstens 80% und insbesondere wenigstens 90% der zu polymerisierenden Monomere M der Polymerisationsreaktion zugeführt. Unter Polymerisationsbedingungen versteht man naturgemäß, dass sich der Inhalt des Polymerisationsgefäßes auf der erforderlichen Polymerisationstemperatur befindet und die Polymerisation durch Zugabe einer Teilmenge des Polymerisationsinitiators, z.B. 0,5 bis 20 Gew.-% der Gesamtmenge an benötigtem Polymerisationsinitiators, gestartet wurde.

Üblicherweise führt man das Monomerzulaufverfahren so durch, dass man die gewünschte Menge an Polymerisationsinitiator, vorzugsweise als wässrige Lösung, gegebenenfalls zusammen mit einem Teil der zu polymerisierenden Monomere M, z.B. 0,5 bis 20%, insbesondere 1 bis 10 Gew.-% vorlegt und auf Polymerisationstemperatur erwärmt. Man kann auch so vorgehen, dass man eine wässrige Lösung der gewünschten Menge an Polymerisationsinitiator im Polymerisationsgefäß vorlegt, diese Lösung auf Polymerisationstemperatur erwärmt, und anschließend die Monomere zuführt. Hierbei hat es sich bewährt, wenn man zur Initiierung der Polymerisationsreaktion einen Teil der Monomere, der vorzugsweise 20% der zu polymerisierenden Monomere nicht überschreitet und insbesondere 0,5 bis 20 und besonders bevorzugt 1 bis 10% der zu polymerisierenden Monomere beträgt, dem Polymerisationsgefäß in einer Portion zuführt. In beiden Varianten werden die verbleibenden Monomere dann in der Regel nach Maßgabe ihres Verbrauchs, z.B. in einem Zeitraum von 30 min bis 20 h, insbesondere 1 h bis 10 h, dem Polymerisationsgefäß zugeführt.

Die Monomere können als solche oder als wässrige Emulsion der Polymerisationsreaktion zugeführt werden. Butadien und Styrol können als Mischung oder über getrennte Zuläufe der Polymerisationsreaktion zugeführt werden. Vorzugsweise werden Styrol sowie Styrol-haltige Mischungen als wässrige Emulsion der Polymerisation zugeführt.

Grundsätzlich ist es möglich, bei der Monomerzugabe das Mischungsverhältnis der verschiedenen Monomere im Zulauf, insbesondere das Styrol/Butadien-Mischungsverhältnis zu verändern. Hierbei erhält man Polymerdispersionen, deren Polymerteilchen einen inhomogenen Aufbau hinsichtlich der in ihnen enthaltenen Polymere aufweisen, oder die verschiedene Polymerteilchen mit unterschiedlicher Polymerzusammensetzung enthalten. In einer bevorzugten Ausführungsform hält man das Mischungsverhältnis der Monomere im Zulauf, zumindest jedoch das Styrol/Butadien-Mischungsverhältnis im Wesentlichen konstant. Dies bedeutet, dass man das Gewichtsverhältnis der Monomere

zueinander, zumindest aber das Gewichtsverhältnis von Styrol zu Butadien, im Zulauf während der Monomerzugabe nicht mehr als 20%, vorzugsweise nicht mehr als 10% ändert. Bei den resultierenden Polymerisaten tritt dann keine Mehrphasigkeit auf, die sich beispielsweise durch mehrere Glasübergangstemperaturen im DSC des Polymeren manifestieren würde.

Erfindungsgemäß erfolgt die Reglerzugabe ähnlich wie die Monomerzugabe im Verlauf der Polymerisationsreaktion. Selbstverständlich kann ein Teil des Reglers, der in der Regel 20% der gesamten Reglermenge nicht überschreiten wird, im Polymerisationsgefäß vorgelegt werden, insbesondere dann, wenn auch Monomere M im Polymerisationsgefäß vorgelegt werden. Vorzugsweise erfolgt die Zugabe des Reglersystems parallel zur Monomerzugabe, d.h. die Hauptmenge, insbesondere wenigstens 80% und besonders bevorzugt die Gesamtmenge des Reglersystems wird in dem Zeitraum zugegeben, in dem auch die zu polymerisierenden Monomere der Polymerisationsreaktion zugeführt werden. Hierbei hat es sich insbesondere bewährt, wenn man die Regler zusammen mit den Monomeren, d. h. als Mischung in den Monomeren, bzw. der Monomeremulsion, der Polymerisationsreaktion zuführt. Selbstverständlich kann die Reglerzugabe auch über einen getrennten Zulauf erfolgen.

Bei der Zugabe des Reglersystems hat es sich bewährt, wenn seine Zusammensetzung während der Zugabe des Reglersystems in einer Weise geändert wird, dass der Anteil an Terpinolen im noch zuzuführenden Reglersystem abnimmt. Anders ausgedrückt bedeutet dies, dass das Verhältnis der bereits zugeführten Menge an Terpinolen zu der bereits zugeführten Menge an Verbindung S während der Zugabe des Reglersystems abnimmt. Besonders bevorzugt wird das Reglersystem in einer Weise zugeführt, dass die Zugabe des Terpinolens zu der Polymerisationsreaktion beendet ist, bevor die Zugabe der Verbindung S beendet ist. Vorzugsweise wird zu Beginn der Zugabe des Reglersystems ausschließlich Terpinolen und keine organische Verbindung S zugegeben. Insbesondere beginnt man mit der Zugabe der Verbindung S erst dann, wenn wenigstens 50%, insbesondere wenigstens 80% und besonders bevorzugt wenigstens 90% der Terpinolenmenge der Polymerisationsreaktion bereits zugeführt worden sind.

Die Änderung des Mengenverhältnisses von Terpinolen zu der Verbindung S kann stufenweise oder kontinuierlich erfolgen. Die Änderung des Verhältnisses kann dadurch erfolgen, dass man Terpinolen und Verbindung S über getrennt regelbare Reglerzuläufe der Polymerisationsreaktion zuführt. Man kann selbstverständlich auch so vorgehen, dass man Terpinolen und die Verbindung S den zuzuführenden Monomermengen in einer den Monomervorratsbehältern nachgeschalteten Mischvorrichtung in der gewünschten Menge zudosiert. Auf diese Weise lassen sich sehr einfach sowohl kontinuierliche als auch stufenweise Veränderungen des Mengenverhältnisses an Terpinolen und Verbindung S realisieren. In einer besonders einfachen Variante vermischt man das Reglersystem mit verschiedenen, nacheinander der Polymerisation zuzuführenden Monomerchargen, wobei das Mengenverhältnis von Verbindung S zu Terpinolen in den Monomerchargen in der Reihenfolge ihrer Zugabe zunimmt. Sofern man Butadien und Styrol über getrennte Monomerzuläufe zugibt, kann man selbstverständlich das Verhältnis der beiden Regler zueinander nur in einer der beiden Monomerchargen ändern und in der anderen konstant halten. Selbstverständlich kann man auch den Regler nur in einem der beiden Monomerzuläufe zuführen und den anderen Monomerzulauf reglerfrei halten.

Für das erfindungsgemäße Verfahren sind grundsätzlich die für eine radikalische wässrige Emulsionspolymerisation bekannten Initiatorsysteme geeignet. Bevorzugte Initiatoren sind wasserlöslich. Insbesondere bevorzugt sind solche Initiatoren, die eine Peroxidgruppe aufweisen wie anorganische und organische Peroxide und Hydroperoxide. Besonders bevorzugt sind Wasserstoffperoxid und die Salze der Peroxodischwefelsäure, z.B. Natriumperoxodisulfat. Geeignet sind auch organische Hydroperoxide wie tert.-Butylhydroperoxid und Cumolhydroperoxid. Teilweise hat es sich bewährt, die vorgenannten Peroxide zusammen mit einem Reduktionsmittel und/oder einer Metallverbindung, die ihre Wertigkeitsstufe ändern kann, einzusetzen.

Geeignete Reduktionsmittel sind Ascorbinsäure, Hydroxymethansulfinsäure, das Bisulfitaddukt von Aceton, Natriumsulfit oder -hydrogensulfit. Beispiele für geeignete Metallverbindungen sind die Salze und wasserlöslichen Komplexe des Eisens, Vanadiums oder des Kupfers. Üblicherweise wird der Radikalstarter in einer Menge von 0,1 bis 3 Gew.-%, bezogen auf die zu polymerisierenden Monomere eingesetzt.

Polymerisationsdruck und Polymerisationstemperatur sind von untergeordneter Bedeutung. Im Allgemeinen arbeitet man bei Temperaturen zwischen Raumtemperatur und 120°C, vorzugsweise bei Temperaturen von 40 bis 110°C und besonders bevorzugt zwischen 50 und 100°C bei einem Druck im Bereich von 1 bis 10 bar.

In der Regel erfolgt die radikalische wässrige Emulsionpolymerisation in Gegenwart oberflächenaktiver Verbindungen. Unter oberflächenaktiven Verbindungen versteht man sowohl Emulgatoren als auch Schutzkolloide, die im Unterschied zu den Emulgatoren in der Regel ein Molekulargewicht oberhalb 2000 Dalton aufweisen und die wasserlöslich sind. Die oberflächenaktiven Substanzen können zusammen mit den Monomeren, beispielsweise in Form einer wässrigen Monomeremulsion zugeführt werden. Selbstverständlich kann man auch einen Teil oder die Gesamtmenge der oberflächenaktiven Substanzen im Polymerisationsgefäß vorlegen.

Bevorzugte Emulgatoren sind anionische und nichtionische Emulgatoren, die in der Regel in Mengen von 0,2 bis 10 Gew.-%, vorzugsweise 0,5 bis 5 Gew.-%, bezogen auf das Polymerisat in der Dispersion bzw. auf die zu polymerisierenden Monomere M eingesetzt werden.

Zu den anionischen Emulgatoren zählen Alkali- und Ammoniumsalze von Alkylsulfaten (Alkylrest: $C_8$-$C_{20}$),

von Schwefelsäurehalbestern ethoxylierter Alkanole (EO-Grad: 2 bis 50, Alkylrest: $C_8$ bis $C_{20}$) und ethoxylierter Alkylphenole (EO-Grad: 3 bis 50, Alkylrest: $C_4$-$C_{20}$), von Alkylsulfonsäuren (Alkylrest: $C_8$ bis $C_{20}$) und von Alkylarylsulfonsäuren (Alkylrest: $C_4$-$C_{20}$). Weitere geeignete anionische Emulgatoren finden sich in Houben-Weyl, Methoden der organischen Chemie, Band XIV/1, Makromolekulare Stoffe, Georg-Thieme-Verlag, Stuttgart, 1961, S. 192-208).

Zu den anionischen grenzflächenaktiven Substanzen zählen auch Verbindungen der allgemeinen Formel I,

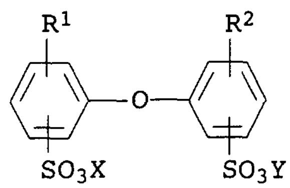

(I)

worin $R^1$ und $R^2$ Wasserstoff oder lineare oder verzweigte Alkylreste mit 6 bis 18 C-Atomen und insbesondere mit 6, 12 und 16 C-Atomen bedeuten, wobei $R^1$ und $R^2$ nicht beide gleichzeitig Wasserstoff sind. X und Y sind bevorzugt Natrium, Kalium oder Ammonium,
wobei Natrium besonders bevorzugt ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z. B. aus der US-A-4,269,749.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxylierungsgrad von 8 bis 50.

Bevorzugt werden im erfindungsgemäßen Verfahren anionische Emulgatoren oder Kombinationen aus wenigstens einem anionischen und einem nichtionischen Emulgator eingesetzt.

Geeignete Schutzkolloide sind beispielsweise Polyvinylalkohole, Stärke- und Cellulosederivate, Carboxylgruppen enthaltende Polymere wie Homo- und Copolymere der Acrylsäure und/oder der Methacrylsäure mit Comonomeren wie Styrol, Olefinen oder Hydroxyalkylestern, oder Vinylpyrrolidon enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/ oder Schutzkolloiden können verwendet werden.

Im Hinblick auf die Verwendung als Bindemittel in Papierstreichmassen enthalten die zu polymerisierenden Monomermischungen neben 20 bis 80 Gew.-% insbesondere 40 bis 70 Gew.-% Styrol und 20 bis 80 Gew.-%, insbesondere 30 bis 55 Gew.-% Butadien, und bis zu 30 Gew.-%, vorzugsweise bis zu 20 Gew.-% und insbesondere bis zu 10 Gew.-%, z.B. 0,5 bis 20 oder 1 bis 10 Gew.-% von Styrol und Butadien verschiedene ethylenisch ungesättigte Comonomere. Beispiele für Comonomere sind:

- monoethylenisch ungesättigte Monomere mit Säuregruppe wie Mono- und Dicarbonsäuren mit 3 bis 10 C-Atomen wie Acrylsäure, Methacrylsäure, Crotonsäure, Acrylamidoglykolsäure, Vinylessigsäure, Maleinsäure, Itaconsäure und die Halbester der Maleinsäure mit $C_1$-$C_4$-Alkanolen, ethylenisch ungesättigte Sulfonsäuren wie Vinylsulfonsäure, Allylsulfonsäure, Styrolsulfonsäure, 2-Acrylamidomethylpropansulfonsäure, und ethylenisch ungesättigte Phosphonsäuren, z.B. Vinylphosphonsäure, Allylphosphonsäure, Styrolphosphonsäure und 2-Acrylamido-2-Methylpropanphosphonsäure und ihre wasserlöslichen Salze, beispielsweise ihre Alkalimetallsalze, vorzugsweise Acrylsäure und Methacrylsäure. Derartige Monomere können in den Monomeren M in einer Menge von bis zu 10 Gew.-%, z.B. 0,1 bis 10 Gew.-%, vorzugsweise 0,1 bis 4 Gew.-%, enthalten sein;

- Amide monoethylenisch ungesättigter Carbonsäuren, wie Acrylamid und Methacrylamid, sowie die N-(Hydroxy-$C_1$-$C_4$-alkyl)amide, vorzugsweise die N-Methylolamide ethylenisch ungesättigter Carbonsäuren, wie N-Methylolacrylamid und N-Methylolmethacrylamid. Derartige Monomere können in den Monomeren M in einer Menge von bis zu 10 Gew.-%, z.B. 0,1 bis 10 Gew.-%, vorzugsweise 0,1 bis 4 Gew.-%, enthalten sein;

- Hydroxyalkylester monoethylenisch ungesättigter Carbonsäuren, insbesondere Hydroxyethyl-, und Hydroxypropyl- und Hydroxybutylester, z.B. Hydroxyethylacrylat, Hydroxypropylacrylat, Hydroxyethylmethacrylat und Hydroxypropylmethacrylat. Derartige Monomere können in den Monomeren M in einer Menge von bis zu 10 Gew.-%, z. B. 0,1 bis 10 Gew.-%, vorzugsweise 0,5 bis 5 Gew.-%, enthalten sein;

- ethylenisch ungesättigten Nitrilen mit vorzugsweise 3 bis 10 C-Atomen wie Acrylnitril und Methacrylnitril. Derartige Monomere können in den Monomeren M in einer Menge von bis zu 30 Gew.-%, z.B. 1 bis 30 Gew.-%, vorzugsweise 5 bis 20 Gew.-%, enthalten sein;

- reaktive Monomere: Zu den reaktiven Monomeren zählen solche, die eine zur Vernetzung geeignete reaktive Funktionalität aufweisen. Hierzu zählen neben den vorgenannten ethylenisch ungesättigten Carbonsäuren, ihren N-Alkylolamiden und Hydroxyalkylestern Monomere, die eine Carbonylgruppe oder eine Epoxygruppe aufweisen, beispielsweise N-Diacetonacrylamid, N-Diacetonmethacrylamid, Acetylacetoxyethylacrylat und Acetylacetoxyethylmethacrylat, Glycidylacrylat und Glycidylmethacrylat. Derartige Monomere können in den Monomeren M in einer Menge von bis zu 10 Gew.-%, z.B. 0,5 bis 10 Gew.-% enthalten sein

- und vernetzende Monomere: Zu den vernetzenden Monomeren zählen solche, die wenigstens zwei nicht konjugierte ethylenisch ungesättigte Bindungen aufweisen, z.B. die Di- und Triacrylate bzw. -methacrylate von di- und trifunktionellen Alkoholen, z.B. Ethylenglykoldiacrylat, Diethylenglykoldiacrylat, Triethylenglykoldiacrylat, Butandioldiacrylat, Hexandioldiacrylat, Trimethylolpropantriacrylat und Tripropylenglykoldiacrylat. Derartige Monomere können in den Monomeren M in einer Menge von bis zu 2 Gew.-%, vorzugsweise nicht mehr als 1 Gew.-%, z.B. 0,01 bis 2 Gew.-%, vorzugsweise 0,01 bis 1 Gew.-%, enthalten sein. In einer bevorzugten Ausführungsform umfassen die Monomere M kein vernetzendes Monomer.

Bevorzugte Comonomere sind die monoethylenisch ungesättigten Mono- und Dicarbonsäuren mit 3 bis 10 C-Atomen, ihre Amide, ihre Hydroxy-$C_2$-$C_4$-Alkylester, ihre N-(Hydroxy-$C_1$-$C_4$-alkyl)amide sowie die vorgenannten ethylenisch ungesättigten Nitrile. Besonders bevorzugte Comonomere sind die monoethylenisch ungesättigten Mono- und Dicarbonsäuren, insbesondere Acrylsäure, Methacrylsäure und Itakonsäure.

In einer besonders bevorzugten Ausführungsform enthält die zu polymerisierende Mischung der Monomere M

- 40 bis 70 Gew.-% Styrol,
- 30 bis 59 Gew.-% Butadien und
- 1 bis 10 Gew.-% einer ethylenisch ungesättigten Mono- oder Dicarbonsäure.

In einer anderen bevorzugten Ausführungsform ist ein Teil des Styrols, vorzugsweise 5 bis 20 Gew.-%, bezogen auf die Gesamtmonomermenge, durch Acrylnitril und/oder Methacrylnitril ersetzt. In dieser bevorzugten Ausführungsform enthält die zu polymerisierende Mischung z.B.

- 30 bis 65 Gew.-% Styrol,
- 30 bis 59 Gew.-% Butadien,
- 5 bis 20 Gew.-% Acrylnitril und/oder Methacrylnitril und
- 1 bis 10 Gew.-% einer ethylenisch ungesättigten Mono- oder Dicarbonsäure.

Im Hinblick auf die Verwendung als Bindemittel in Papierstreichfarben hat es sich als vorteilhaft erwiesen, wenn das aus der polymerisation resultierende Polymerisat eine Glasübergangstemperatur im Bereich von -20 bis +50°C und vorzugsweise im Bereich von 0 bis 30°C aufweist. Als Glasübergangstemperatur gilt hier die sogenannte mid-point-Temperatur, die nach ASTM 3418-82 mittels DSC bestimmt werden kann.

Die Glasübergangstemperatur kann über die eingesetzte Monomermischung M in bekannter Weise gesteuert werden.

Nach Fox (T.G. Fox, Bull. Am. Phys. Soc. (Ser. II) 1, 123 [1956] und Ullmanns Encyklopädie der technischen Chemie, Weinheim (1980), S. 17, 18) gilt für die Glasübergangstemperatur von Mischpolymerisaten bei großen Molmassen in guter Nährung

$$\frac{1}{Tg} = \frac{X^1}{Tg^1} + \frac{X^2}{Tg^2} + \cdots\cdots \frac{X^n}{Tg^n}$$

wobei $X^1$, $X^2$, ..., $X^n$ die Massenbrüche der Monomeren 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt. Polystyrol besitzt danach eine $T_g$ von 380 K und Polybutadien eine $T_g$ von 171 K bzw. 166 K.

Die nach dem erfindungsgemäßen Verfahren erhältlichen Polymerisate weisen in der Regel einen gewichtsmittleren Teilchendurchmesser unterhalb 1000 nm auf. Der $d_w$-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wird. Die Ultrazentrifugenmessung liefert die integrale Massenverteilung des Teilchendurchmessers einer Probe. Hieraus läßt sich entnehmen, wieviele Gewichtsprozent der Teilchen einen Durchmesser gleich oder unter einer bestimmten Größe haben. Hinsichtlich der erfindungsgemäßen Verwendung in Papierstreichmassen liegt der gewichtsmittlere Teilchendurchmesser vorzugsweise unterhalb 500 nm, insbesondere unterhalb 300 nm und besonders bevorzugt im Bereich von 50 bis 300 und ganz besonders bevorzugt im Bereich von 70 bis 200 nm.

Verfahren zur Einstellung der Polymerteilchengröße einer wässrigen Polymerisatdispersion sind aus dem Stand der Technik bekannt. Vorzugsweise wird die Emulsionspolymerisation zur Einstellung einer definierten Polymerteilchengröße nach dem Saatlatexverfahren oder in Gegenwart eines in-situ hergestellten Saatlatex durchgeführt. Verfahren hierzu sind bekannt und können dem Stand der Technik entnommen werden (siehe EP-B 40419 sowie 'Encyclopedia of Polymer Science and Technology', Vol. 5, John Wiley & Sons Inc., New York 1966, S. 847).

In einer bevorzugten Ausführungsform der vorliegenden Erfindung wird die Polymerisation in Anwesenheit von 0,01 bis 4 Gew.-%, insbesondere 0,05 bis 3 Gew.-% und besonders bevorzugt 0,1 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 400 nm, vorzugsweise 20 bis 120 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch ethylenisch ungesättigte Carbonsäuren, z.B. Acrylsäure und/oder Methacrylsäure und/oder deren Amide, vorzugsweise weniger als 10 Gew.-%, bezogen auf das Gesamtgewicht der Polymerisatteilchen im Saatlatex, einpolymerisiert enthalten kann.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem anorganischen Sulfit oder dem Salz einer $\alpha$-Hydroxysulfon bzw. -sulfinsäure (Hydrogensulfitaddukt an Carbonylverbindung) durchgeführt.

Die nach dem erfindungsgemäßen Verfahren erhältlichen Polymerdispersionen zeichnen sich durch gute mechanische Stabilitäten und durch vergleichbar geringe Restmonomeranteile aus. Die vorliegende Erfindung betrifft auch Papierstreichfarben, die wenigstens ein Styrol-Butadien-Copolymerisat in Form einer der erfindungsgemäßen wässrigen Polymerisatdispersionen enthalten.

Naturgemäß umfassen die Papierstreichfarben als Hauptbestandteil wenigstens ein anorganisches oder organisches Pigment. Beispiele für anorganische Pigmente sind Tonmineralien wie Kaolin, Bariumsulfat, Titandioxid, Calciumcarbonat, Satinweiß, Talk, Aluminiumhydroxid, Zinkoxid und dergleichen. Beispiele für organische Pigmente sind Polystyrol-Latices sowie Harnstoff-Formaldehydharze, die vorzugsweise ebenfalls in Form einer wässrigen Dispersion eingesetzt werden. Eine erfindungsgemäß bevorzugte Ausführungsform der Papierstreichfarben umfasst als Pigment ein Tonmineral, vorzugsweise Kaolin sowie Calciumcarbonat.

Die Menge an Bindemittel in den erfindungsgemäßen Papierstreichfarben beträgt in der Regel 3 bis 30 und vorzugsweise 5 bis 20 Gew.-Teile auf 100 Gew.-Teile Pigment. Weiterhin enthalten die erfindungsgemäßen Papierstreichfarben je 100 Gew.-Teilen Pigment in der Regel 0,1 bis 5 Gew.-Teile und vorzugsweise 1 bis 3 Gew.-Teile Hilfsstoffe. Hierzu zählen Wasserbeständigkeitsverbesserungsmittel, Dispergierhilfsmittel für die Pigmente, Viskositätsmodifizierer, Härtungsmittel, Farbpigmente, Fluoreszenzfarbstoffe, Mittel zur Einstellung des pH-Wertes sowie Cobindemittel.

Bei den Cobindemitteln handelt es sich in der Regel um wasserlösliche Polymere wie Kasein, modifiziertes Kasein, Stärke, modifizierte Stärke, Polyvinylalkohol, Carboxymethylcellulose, Polyacrylsäuren und dergleichen. Der Anteil an Cobindemittel wird in der Regel 1 Gew.-Teil, bezogen auf 100 Gew.-Teile Pigment nicht überschreiten.

Als Mittel zur Einstellung des pH-Wertes wird man in der Regel Basen, vorzugsweise anorganische Basen wie Natriumhydroxid, Kaliumhydroxid oder Calciumhydroxid verwenden. Vorzugsweise hat die Papierstreichfarbe einen pH-Wert im Bereich von 7,5 bis 9,5.

Die Herstellung der erfindungsgemäßen Papierstreichfarben erfolgt in üblicher Weise durch Vermischen der Komponenten, vorzugsweise durch Zugabe einer wässrigen Polymerdispersion, wie sie nach dem erfindungsgemäßen Verfahren erhältlich ist, zu einer wässrigen Suspension des Pigmentes, welche bereits in der Regel einen Teil oder die Gesamtmenge der erforderlichen Hilfsmittel enthält.

Die erfindungsgemäßen Papierstreichfarben führen zu Beschichtungen mit verbesserter Rupffestigkeit, insbesondere verbesserter Naßrupffestigkeit.

Die folgenden Beispiele sollen die Erfindung erläutern, ohne sie jedoch einzuschränken.

I. Herstellung der erfindungsgemäßen Polymerdispersionen (Beispiele 1 und 2)

Beispiel 1 (Dispersion D1)

In einem Polymerisationsgefäß legte man 300 g Wasser, 1,8 g Emulgatorlösung, 37 g einer 33 gew.-%igen Polymersaat ($d_{50}$ 30 nm) sowie 10% der Initiatorlösung (Zulauf 2) und 5% der Monomeremulsion (Zulauf 1) vor und erwärmte auf 85°C.

Dann gab man über zwei getrennte Zuläufe zeitgleich beginnend innerhalb 4 h die Restmenge der Monomeremulsion und innerhalb 4,5 h die Restmenge der Initiatorlösung unter Beibehaltung der Temperatur in das Polymerisationsgefäß. Während der Polymerisationsreaktion stellte man mit 16 g einer 25 gew.-%igen Natronlauge den pH-Wert nach. Nach Beendigung der Monomerzugabe behielt man die 85°C weitere 2 h bei, kühlte auf 65°C und gab dann 35 g 10%iger wässriger Natronlauge zu. Dann gab man innerhalb 2 h zeitgleich beginnend eine wässrige Lösung von 2 g tert.-Butylhydroperoxid in 67 g Wasser sowie eine Lösung von 1,3 g Aceton und 2 g Natriumdisulfit in 67 g Wasser unter Beibehaltung der Temperatur zu. Nach einer weiteren Stunde kühlte man auf Raumtemperatur ab.

| Zulauf 1: | |
|---|---|
| 269 g | entionisiertes Wasser |
| 16 g | Emulgatorlösung |
| 10 g | tert.-Dodecylmercaptan |
| 2 g | Terpinolen |
| 530 g | Styrol |
| 420 g | Butadien |
| 50 g | Acrylsäure |

| Zulauf 2: | |
|---|---|
| 10 g | Natriumperoxodisulfat in 267 g Wasser |

Emulgatorlösung: Natriumlaurylsulfat, 28 gew.-%ig in Wasser

Der Feststoffgehalt der Dispersion lag bei etwa 50 Gew.-%. Die Lichtdurchlässigkeit betrug 61%. Die gewichtsmittlere Teilchengröße $d_{50}$ lag bei 142 nm. Der pH-Wert lag bei 6,2 und die Glasübergangstemperatur $T_g$ betrug 5°C.

Die Glasübergangstemperatur wurde mittels DSC als "mid-point" Temperatur bestimmt. Die relative Lichtdurchlässigkeit der Dispersion wurde gegenüber Wasser (100%) an 0,01 gew.-%igen Proben bei einer Küvettenlänge von 2,5 cm bestimmt. Die Bestimmung des mittleren Teilchendurchmessers erfolgte nach ISO 13321 durch quasielastische Lichtstreuung mit einem Malvern-Autosizer 2C an etwa 0,01 gew.-%igen Proben.

Beispiel 2 (Dispersion D2)

In einem Polymerisationsgefäß legte man 300 g entionisiertes Wasser, 1,8 g Emulgatorlösung, 38 g Saatlatex (Polystyroldispersion, 33 gew.-%ig, $d_{50}$ 30 nm) sowie 5% von Zulauf 1, 5% von Zulauf 3 und 10% von Zulauf 4 vor und erwärmte auf 85°C.

Anschließend begann man zeitgleich über getrennte Zuläufe mit der Zugabe von Zulauf 1, Zulauf 3 und Zulauf 4 unter Beibehaltung der 85°C. Zulauf 1 wurde innerhalb 60 min, Zulauf 3 innerhalb 4 h und Zulauf 4 innerhalb von 4,5 h zugegeben. Sofort nach Beendigung von Zulauf 1 gab man Zulauf 2 innerhalb von 3 h in das Polymerisationsgefäß. Während der Polymerisation führte man den pH-Wert der Reaktionsmischung mit insgesamt 16 g einer 25 gew.-%igen Natronlauge nach. Nach Beendigung der Zuläufe 2 und 3 behielt man die 85°C bei und gab dann 25 g 10 %ige Natronlauge zu. Dann gab man innerhalb 2 h die in Beispiel 1 angegebenen Lösungen von tert.-Butylhydroperoxid sowie von Aceton und Natriumdisulfit zu. Anschließend neutralisierte man mit 30 g einer 10 gew.-%igen Natronlauge und kühlte auf Raumtemperatur ab.

| Zulauf 1: | |
|---|---|
| 35 g | entionisiertes Wasser |
| 4 g | Emulgatorlösung |
| 2 g | 25%ige Natronlauge |
| 14 g | Acrylsäure |
| 3 g | Terpinolen |
| 132 g | Styrol |

| Zulauf 2: | |
|---|---|
| 224 g | entionisiertes Wasser |
| 12 g | Emulgatorlösung |
| 6 g | Natronlauge 25%ig |
| 36 g | Acrylsäure |
| 9 g | tert.-Dodecylmercaptan |
| 398 g | Styrol |

| Zulauf 3: | |
|---|---|
| 420 g | Butadien |

| Zulauf 4: | |
|---|---|
| 10 g | Natriumperoxodisulfat in 267 g Wasser |

Die erhaltene Polymerdispersion hatte einen pH-Wert von 6 und einen Feststoffgehalt von etwa 50 Gew.-%. Die Lichtdurchlässigkeit wurde zu 58% bestimmt. Die gewichtsmittlere Teilchengröße $d_{50}$ lag bei 135 nm. Das Polymerisat wies eine Glasübergangstemperatur von etwa 1°C auf.

II Anwendungstechnische Prüfung

1. Rezeptur für die Streichfarbe

| | |
|---|---|
| 64 Gew.-Teile | Wasser |
| 70 Gew.-Teile | Calciumcarbonat |
| 30 Gew.-Teile | Kaolin |
| 0,4 Gew.-Teile | Polyacrylsäure-Natriumsalz |
| 0,05 Gew.-Teile | Natriumhydroxid (als 25 gew.-%ige Lösung) |
| 0,5 Gew.-Teile | Carboxymethylcellulose |
| 20 Gew.-Teile | Polymerdispersion (50 gew.-%ig), entsprechend 10 g Polymerisat. |

Der Feststoffgehalt der Farbe lag bei 60%.

2. Herstellung und Prüfung eines beschichteten Papiers

Als Rohpapier wurde ein holzfreies Streichrohpapier mit einem Flächengewicht von 70 g/$m^2$ verwendet. Der Auftrag der Papierstreichmasse erfolgte einseitig mit 10 g/$m^2$ auf einer Laborstreichmaschine. Die Trocknung erfolgte mit einem IR-Strahler.
Die Papiere passierten vor den anwendungstechnischen Prüfungen viermal einen Laborkalander (ein Walzenpaar, Liniendruck: 2000 N/cm).

Trockenrupffestigkeit

Aus den zu prüfenden Papieren wurden Streifen in der Größe 33x3 cm in Längsrichtung geschnitten und diese Streifen 15 h bei 27°C mit einer relativen Luftfeuchtigkeit von 50% im Klimaraum gelagert.
Die Streifen wurden anschließend in einem Druckwerk (IGT Bedruckbarkeitsprüfer AC2/AIC2) mit einer Standardfarbe (Druckfarbe 3808 der Fa. Lorilleux-Lefranc) bedruckt.
Die Prüfstreifen wurden mit kontinuierlich steigender Geschwindigkeit (maximale Geschwindigkeit 200 cm/s) durch das Druckwerk geführt. Als Maß für die Trockenrupffestigkeit wird die Geschwindigkeit in cm/s angegeben, bei der nach Druckbeginn 10 Ausrisse aus der Papierstreichmasse (Rupfpunkte) erfolgt sind.

Naßrupffestigkeit

Die Prüfstreifen wurden wie oben beschrieben hergestellt und vorbereitet.
Das Druckwerk (IGT Bedruckbarkeitsprüfer AC2/AIC2) wurde so eingerichtet, daß die Prüfstreifen vor dem Druckvorgang mit Wasser befeuchtet werden.
Der Druck wurde mit einer konstanten Geschwindigkeit von 0,6 cm/s durchgeführt.
Ausrisse aus der Papierstreichmasse bzw. dem Papier sind als unbedruckte Stellen sichtbar. Zur Bestimmung der Naßrupffestigkeit wird daher mit einem Farbdensitometer die Farbdichte im Vergleich zum vollen Farbton in % bestimmt. Je höher die angegebene Farbdichte, desto besser die Naßrupffestigkeit.
Streichfarbe F1 enthält Dispersion D1. Streichfarbe F2 enthält Dispersion D2. Zu Vergleichszwecken wurde auch ein handelsübliches Bindemittel auf Basis von Styrol/Butadien/Acrylnitril (DL 966-Latex der Fa. Dow Chemical) eingesetzt.

Tabelle 1

| Farbe | Bindemittel | Trockenrupffestigkeit [cm/s] | Naßrupffestigkeit [cm/s] |
|---|---|---|---|
| F1 | D1 | 106 | 95 |
| F2 | D2 | 102 | 95 |
| VF1 | VD1[1)] | 88 | 79 |

[1)] Latex DL 966

**Patentansprüche**

1. Verfahren zur Herstellung einer wässrigen Styrol-Butadien-Polymerdispersion durch radikalische wässrige Emulsionspolymerisation einer Monomermischung M, enthaltend

   - Styrol,
   - Butadien und gegebenenfalls
   - bis 30 Gew.-%, bezogen auf 100 Gew.-% Monomere, von Styrol und Butadien verschiedene ethylenisch ungesättigte Comonomere;

   nach einem Monomerzulaufverfahren, **dadurch gekennzeichnet, dass** man der Polymerisationsreaktion in ihrem Verlauf ein Reglersystem zuführt, das bezogen auf 100 Gew.-% Monomere,

   - 0,02 bis 0,4 Gew.-% Terpinolen und
   - 0,5 bis 2 Gew.-% einer organischen Verbindung S mit wenigstens einer SH-Gruppe

   umfasst.

2. Verfahren nach Anspruch 1, **dadurch gekennzeichnet, dass** während der Zugabe des Reglersystems das Verhältnis der bereits zugeführten Menge an Terpinolen zu der bereits zugeführten Menge an Verbindung S abnimmt.

3. Verfahren nach Anspruch 2, **dadurch gekennzeichnet, dass** das Reglersystem in einer Weise zugeführt wird, dass die Zugabe der Terpinolenmenge vor Beendigung der Zugabe der Verbindung S beendet wird.

4. Verfahren nach Anspruch 2 oder 3, **dadurch gekennzeichnet, dass** man mit der Zugabe der Verbindung S erst

beginnt, wenn wenigstens 50% der Terpinolenmenge der Polymerisation zugeführt worden sind.

5. Verfahren nach einem der vorhergehenden Ansprüche, **dadurch gekennzeichnet, dass** die Verbindung S ausgewählt ist unter $C_4$-$C_{18}$-Alkylmercaptanen.

6. Verfahren nach einem der vorhergehenden Ansprüche, **dadurch gekennzeichnet, dass** die von Styrol und Butadien verschiedenen Monomere ausgewählt sind unter monoethylenisch ungesättigten Mono- und Dicarbonsäuren mit 3 bis 10 C-Atomen, deren Amiden, deren Hydroxy-$C_2$-$C_4$-alkylestern, deren N-(Hydroxy-$C_1$-$C_4$-alkyl)amiden sowie ethylenisch ungesättigten Nitrilen.

7. Verfahren nach einem der vorhergehenden Ansprüche, **dadurch gekennzeichnet, dass** die zu polymerisierende Monomermischung enthält:

   - 40 bis 70 Gew.-% Styrol,
   - 30 bis 59 Gew.-% Butadien und
   - 1 bis 10 Gew.-% einer ethylenisch ungesättigten Mono- oder Dicarbonsäure.

8. Verfahren nach einem der Ansprüche 1 bis 6, **dadurch gekennzeichnet, dass** die zu polymerisierende Monomermischung enthält:

   - 30 bis 65 Gew.-% Styrol,
   - 30 bis 59 Gew.-% Butadien,
   - 5 bis 20 Gew.-% Acrylnitril und/oder Methacrylnitril und
   - 1 bis 10 Gew.-% einer ethylenisch ungesättigten Mono- oder Dicarbonsäure.

9. Verfahren nach einem der vorhergehenden Ansprüche, **dadurch gekennzeichnet, dass** man das Mengenverhältnis von Styrol zu Butadien in den zuzuführenden Monomeren während der Zugabe der Monomere zu der Polymerisationsreaktion um weniger als 20% ändert.

10. Wässrige Polymerdispersion, erhältlich nach einem Verfahren gemäß Anspruch 1 bis 9.

11. Verwendung der wässrigen Polymerdispersion nach Anspruch 10 als Bindemittel in Papierbeschichtungsstreichfarben.

12. Papierstreichfarben, enthaltend:

    i) wenigstens ein anorganisches Pigment,

    ii) 5 bis 20 Gew.-Teile wenigstens eines Styrol-Butadien-Copolymerisats in Form einer wässrigen Polymerdispersion gemäß Anspruch 10,

    iii) 0,1 bis 5 Gew.-Teile übliche Hilfsmittel, jeweils bezogen auf 100 Gew.-Teile Pigment.